# EUROPÄISCHE PATENTSCHRIFT

(11) **EP 0 720 765 B1**
(45) Veröffentlichungstag und Bekanntmachung des Hinweises auf die Patenterteilung: **19.11.1997**
(21) Anmeldenummer: 94926773.6
(22) Anmeldetag: 13.09.1994
(51) Int. Cl.: G21C 3/322

(54) **BRENNELEMENT MIT VERKÜRZTEM TRAGENDEN KÜHLMITTELROHR**
FUEL ELEMENT WITH A SHORTENED SUPPORTING COOLANT PIPE
ELEMENT COMBUSTIBLE POURVU D'UN TUYAU-SUPPORT RACCOURCI DE FLUIDE CALOPORTEUR

(30) Priorität: 22.09.1993 DE 9314347 U
(43) Veröffentlichungstag der Anmeldung: 10.07.1996
(73) Patentinhaber: SIEMENS AKTIENGESELLSCHAFT, 80333 München (DE)
(72) Erfinder: MEIER, Werner, D-91358 Kunreuth (DE)
(86) Internationale Anmeldenummer: DE9401046
(87) Internationale Veröffentlichungsnummer: WO9508826

(56) Entgegenhaltungen:
- EP-A- 0 204 288
- EP-A- 0 566 863
- WO-A-91/13441
- DE-A- 3 828 616
- PATENT ABSTRACTS OF JAPAN vol. 16, no. 454 (P-1425) 21. September 1992 & JP,A,04 160 396 (NUCLEAR FUEL IND) 3. Juni 1992
- DATABASE WPI Week 8611, Derwent Publications Ltd., London, GB; AN 86-072360 & JP,A,61 022 289 (TOSHIBA) 30. Januar 1986

## Beschreibung

Die Erfindung geht aus von einem Brennelement mit den im Oberbegriff des Anspruchs 1 angegebenen Merkmalen (PCT/DE 91/00168). Fuß- und Kühlmittelrohr bilden also zusammen mit Abstandhaltern ein Trageskelett, wobei der Steckbolzen verhältnismäßig kurz ist, das Kühlmittelrohr also nach oben weit über den Bereich der aktiven Zone hinausreicht.

Bei hohem Entladeabbrand und somit langer Verweildauer im Kern ist es vorteilhaft, die Stabzahl je Brennelement zu vergrößern und dadurch die lineare Stableistung und die Staboberflächentemperatur zu verringern. Erhöht man deshalb bei gleicher Außengeometrie des Brennelements die Stabzahl, so steigen die Druckverluste, die zu einer entsprechenden Durchsatzverminderung führen. Daneben ergibt sich noch eine negative Beeinflussung der Zweiphasenstabilität, da das Verhältnis aus einphasigem und zweiphasigem Druckverlust ungünstiger wird.

Diese Effekte können kompensiert werden, indem der Druckverlust durch eine Vergrößerung des Strömungsquerschnitts im oberen Zweiphasengebiet reduziert wird. Die Lösung, durch Verwendung teillanger Brennstäbe den Querschnitt im oberen Bereich zu vergrößern, kann jedoch nicht auf beliebig viele Stäbe ausgedehnt werden, da dies dem Ziel, möglichst viel Brennstoff zu verwenden, widerspräche.

Der Erfindung liegt die Aufgabe zugrunde, die genannten nachteiligen Effekte auf eine andere Weise zu kompensieren. Diese Aufgabe wird gelöst durch ein Brennelement mit den Merkmalen des Anspruchs 1. Bei der Erfindung wird also eine Querschnittserweiterung dadurch erreicht, daß das obere Ende des Kühlmittelrohrs bereits im Bereich der Oberkante der aktiven Zone angeordnet wird und das entsprechende Endstück des Kühlmittelrohrs einen Steckbolzen mit deutlich kleinerem Querschnitt als dem Querschnitt des Kühlmittelrohrs trägt. Der Steckbolzen ist verhältnismäßig lang und dünn; er ist mit der Deckplatte tragend verbunden. Die Öffnungen am oberen Ende des Kühlmittelrohrs werden dabei vorteilhaft als zum Steckbolzen ungefähr parallele oder schräg auf den Steckbolzen hin gerichtete Durchtrittskanäle ausgebildet.

Bei weiterhin tragender Funktion des Kühlmittelrohrs werden somit die Druckverluste und die negative Beeinflussung der Zweiphasenstabilitat vermindert. Das Kühlmittelrohr stellt daher praktisch für die ganze Länge der aktiven Zone, wo eine ausreichende Moderation erforderlich ist, flüssiges Kühlmittel als Moderator zur Verfügung. Der Steckbolzen, der aus mechanischen Gründen verhältnismäßig massiv ausgebildet sein muß, ragt nicht unnötig weit in den Bereich hohen Neutronenflusses, der durch die unvermeidliche Neutronenabsorption des Werkstoffes geschwächt werden würde.

Die beschriebene Ausbildung der Austrittsöffnungen als zum Steckbolzen parallele oder zum Steckbolzen gerichtete Durchtrittskanäle am oberen Endstück des Kühlmittelrohrs verhindert die Ansammlung von Gas bzw. Dampf am Ende des Kühlmittelrohrs, die in hydraulischen Systemen zu Schwingungen im Durchsatz führen und selbst bei kleinsten Amplituden die Anreger von Instabilitäten sein könnten. Strömte das Moderatorwasser nicht ungefähr parallel zum Steckbolzen oder schräg auf dem Steckbolzen hin gerichtet, sondern radial nach außen auf die Brennstäbe gerichtet, so könnte es diese zu unzulässigen Schwingungen anregen und die Ursache für "fretting" sein.

Ein weiterer Vorteil dieser Anordnung der Durchtrittskanäle am oberen Ende des Kühlmittelrohrs besteht darin, daß vorhandene Schweißnähte von der Innenseite des Kühlmittelrohrs her für die Prüfung mittels Endoskops zugänglich sind.

Anhand von neun Figuren wird die Erfindung näher erläutert.

Es zeigen:
Figur 1 einen Längsschnitt des oberen Teils eines Brennelements nach der Erfindung,
Figuren 2 und 3 einen Längsschnitt und einen Querschnitt durch die einfachste Ausführung des Kühlmittelrohrendstücks nach der Erfindung,
Figuren 4 und 5 Längsschnitt und Querschnitt durch das Kühlmittelrohrendstück mit zum Steckbolzen geneigtem Austrittskanal,
Figuren 6 und 7 Längs- und Querschnitt bei quadratischem Steckbolzen und quadratischem Kühlmittelrohr,
Figur 8 den Querschnitt eines Steckbolzens mit Strömungsleitrinnen und
Figur 9 einen Längsschnitt durch den oberen Teil eines Brennelementes in einer abgewandelten Form.

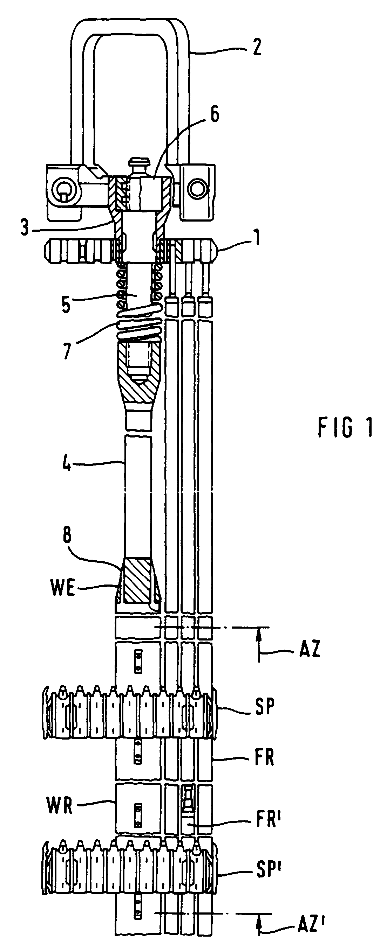

In Figur 1 sind die für die Erfindung bedeutsamen Bestandteile eines Brennelements dargestellt. Das obere Endstück WE des Kühlmittelrohrs WR geht in einen Steckbolzen 4 mit deutlich kleinerem Querschnitt als dem Querschnitt des Kühlmittelrohrs WR über. Dieser Steckbolzen 4 ist in seiner Verlängerung 5 durch die Deckplatte 1 hindurchgeführt und durch einen Anschlag 6, z. B. eine Überwurfmutter, in der Hülse 3 befestigt, die an den Griff 2 angeformt ist. Die Deckplatte 1 ist über eine auf Druck beanspruchte schraubenförmige Feder 7 abgestützt. Im Bereich der aktiven Zone AZ sind am Kühlmittelrohr Abstandhalter SP angebracht, die senkrecht zum Kühlmittelrohr WR stehen und durch die die Brennstäbe FR geführt sind. Die aktive Zone AZ' der teillängen Brennstäbe FR' endet bereits unterhalb des von oben zweiten Abstandhalters SP'. In den Brennstäben befindet sich oberhalb der aktiven Zone ein Hohlraum, den das Spaltgas ausfüllt.

Das obere Ende des Kühlmittelrohrs WR ist erfindungsgemäß im Bereich der Oberkante der aktiven Zone AZ angeordnet. Da der Steckbolzen 4 einen deutlich kleineren Querschnitt als das Kühlmittelrohr WR hat, steht somit oberhalb der aktiven Zone AZ mehr Querschnitt für die Strömung zur Verfügung. Durch die zum Steckbolzen parallelen Austrittskanäle 8 strömt das Kühlmittel parallel zu den Brennstäben aus dem Kühlmittelrohr WR.

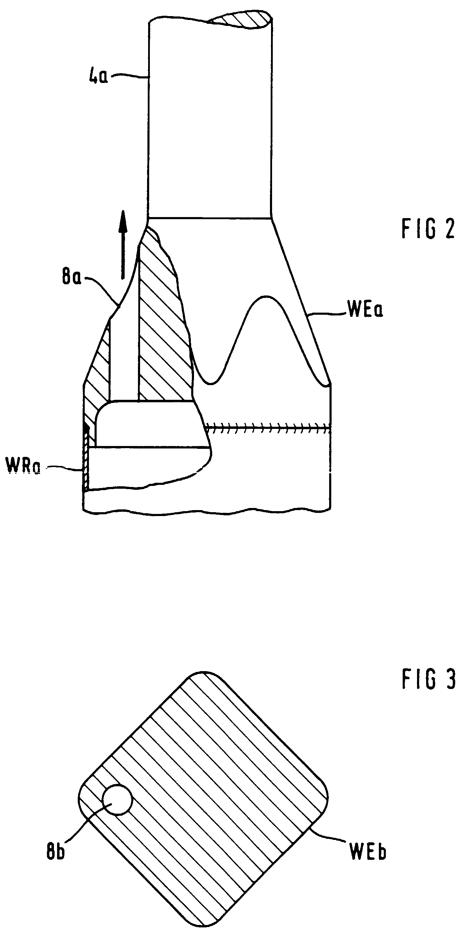

Figur 2 zeigt teilweise den Längsschnitt, teilweise die Seitenansicht der einfachsten Ausführung des oberen Endstücks WEa des Kühlmittelrohrs WRa mit einem runden Steckbolzen 4, in den das Endstück WEa übergeht. Die zwei Austrittskanäle 8a sind parallel zum Steckbolzen 4a ausgeführt. Das Kühlmittel strömt durch die Austrittskanäle 8a vertikal nach oben.

Figur 3 zeigt den Querschnitt eines Endstücks WEb eines quadratischen Kühlmittelrohrs WR mit einem exemplarisch eingezeichneten Austrittskanal 8b, der oberhalb einer Ecke des Kühlmittelrohrs ausgebildet ist.

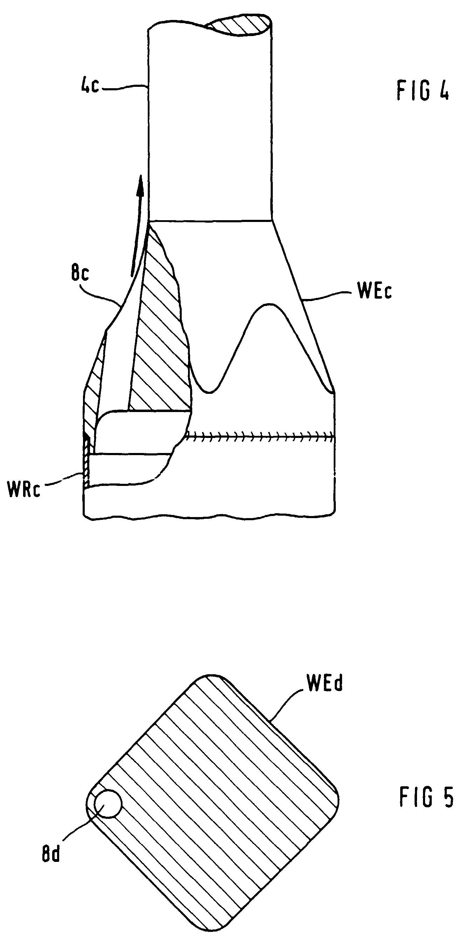

Figur 4 zeigt teilweise den Längsschnitt, teilweise die Seitenansicht eines Endstücks WEc eines Kühlmittelrohrs WRc mit zwei schräg zum runden Steckbolzen 4c hin gerichteten Austrittskanälen 8c. Hierbei ist die Schräglage maximal: Die Austrittskanäle 8c beginnen am Rand des Kühlmittelrohrs WRc und enden unmittelbar an der Oberfläche des Steckbolzens 4c.

Figur 5 zeigt den Querschnitt des Kühlmittelrohrendstücks WEd unmittelbar über dem Ende eines quadratischen Kühlmittelrohrs. Der exemplarisch eingezeichnete Austrittskanal 8d ist am Rand des Kühlmittelrohrs genau in der Ecke angeordnet.

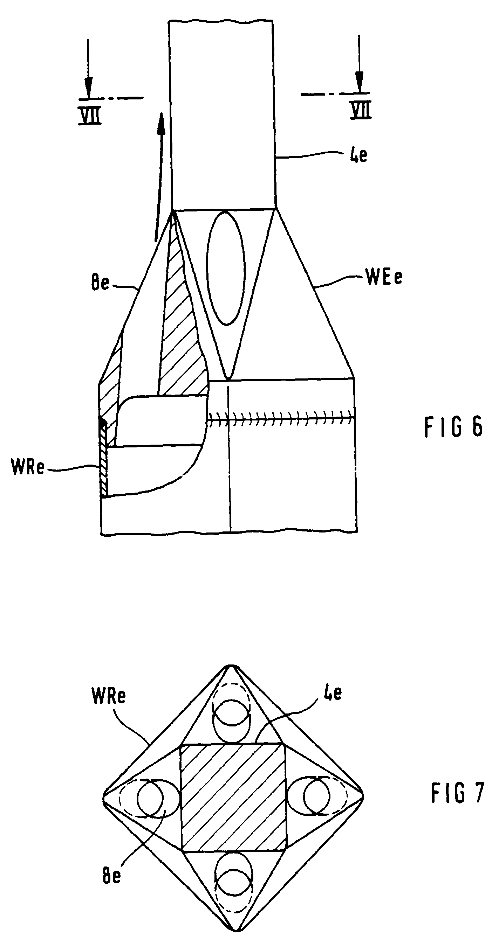

Figur 6 zeigt teilweise den Längs-, teilweise den Querschnitt eines Kühlmittelrohrendstücks WEe und eines Steckbolzens 4e mit quadratischem Querschnitt. Die vier Austrittskanäle 8e sind schräg auf eine Seitenfläche des Steckbolzens 4e hin gerichtet.

Im Querschnitt des Kühlmittelrohrendstücks entsprechend der Ebene VII-VII erkennt man nach Figur 7 die Lage der Austrittskanäle 8e bei quadratischem Kühlrohr WRe und quadratischem Steckbolzen 4e, dessen Seitenflächen im 45 ° Winkel zu denen des Kühlmittelrohrs WRe stehen. Die Austrittskanäle 8e sind schräg auf die Seitenflächen des Steckbolzens 4e hin gerichtet.

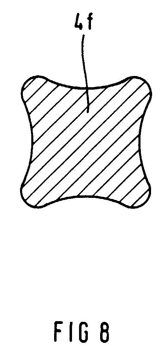

Figur 8 zeigt den Querschnitt eines Steckbolzens 4f, bei dem die Seitenflächen nach innen vertieft sind, so daß sie für das aus den Austrittskanälen strömende Kühlmittel Strömungsleitrinnen bilden.

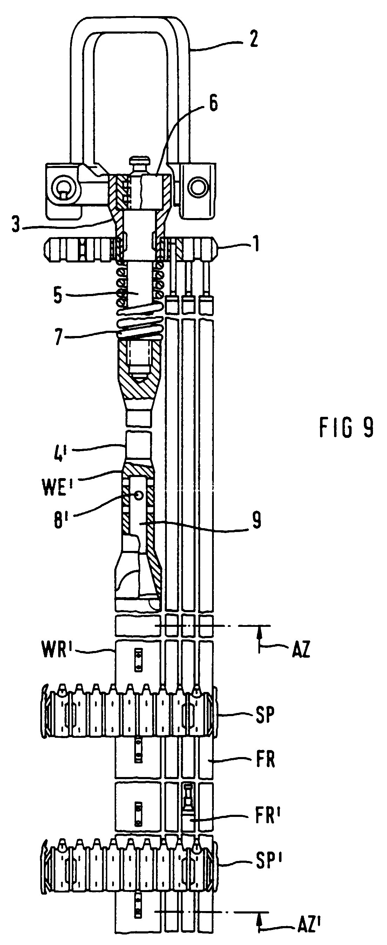

Figur 9 zeigt ein Brennelement in einer abgewandelten Form. Die Figur unterscheidet sich von Figur 1 durch die Länge des Steckbolzens 4', das Kühlmittelrohr WR', das Kühlmittelrohrendstück WE' und die Ausbildung der Austrittskanäle 8'. Das Kühlmittelrohr WR' wird zwar im Bereich der aktiven Zone AZ schmaler, endet dort jedoch nicht. Das Kühlmittelrohrendstück WE' ist somit oberhalb der aktiven Zone AZ angeordnet und geht in den kürzeren Steckbolzen 4' über. Die Austrittskanäle 8' sind radial angeordnet; das Kühlmittel strömt also seitlich gegen die Brennstäbe FR, was diese allerdings zu Schwingungen anregen kann, die in vielen Fällen unzulässig sein können. Um eine optimale Gestaltung des Kühlmittelrohroberendes zu erreichen, wird gemäß der Erfindung der Steckbolzen 4' möglichst lang und die Sackbohrung 9 im Endstück WE' möglichst kurz gewählt, wobei das Endstück WE' sehr nahe an der Oberkante AZ der aktiven Zone liegt.

## Patentansprüche

1. Kernreaktorbrennelement mit
a) mindestens einem von Brennstäben (FR) seitlich umgebenen Kühlmittelrohr (WR) mit jeweils mindestens einer Öffnung an seinem oberen und unteren Ende,
b) einer vom Kühlmittelrohr (WR) getragenen, mit dem unteren Ende des Kühlmittelrohrs (WR) verbundenen Bodenplatte mit Einlaßöffnungen für flüssiges Kühlmittel,
c) einem in einen Steckbolzen (4) mit einem deutlich kleineren Querschnitt als dem Querschnitt des Kühlmittelrohrs (WR) übergehenden Endstück (WE) des oberen Endes des Kühlmittelrohres (WR),
d) wobei der Steckbolzen (4) in seiner Verlängerung (5) durch eine von Kühlmittelaustrittsöffnungen durchbrochene Deckplatte (1) greift und mit dieser Deckplatte (1) tragend verbunden ist,
**dadurch gekennzeichnet**,
e) daß sich das obere Endstück (WE) des Kühlmittelrohres (WR) im Bereich der Oberkante der aktiven Zone (AZ) befindet.

2. Kernreaktorbrennelement nach Anspruch 1,
**dadurch gekennzeichnet**,
daß die Öffnungen (8) am oberen Ende des Kühlmittelrohrs (WR) als zum Steckbolzen (4) ungefähr parallele oder schräg auf den Steckbolzen (4) hin gerichtete Durchtrittskanäle (8) ausgebildet sind.

## Claims

1. Nuclear reactor fuel element, having:
a) at least one coolant pipe (WR) laterally surrounded by fuel rods (FR), the said coolant pipe having at least one opening at the respective lower and upper end,
b) a base plate having inlet openings for liquid coolant, the said base plate being supported by the coolant pipe (WR) and being connected to the lower end of the coolant pipe (WR),
c) an end section (WE) of the upper end of the coolant pipe (WR), which end section merges with a linking stud (4) having a markedly smaller cross-section than the cross-section of the coolant pipe (WR),
d) wherein, at its extension (5), the linking stud (4) passes through a top plate (1) pierced by coolant outlet openings and is connected in a load-bearing fashion to this top plate (1), **characterised in that**
e) the upper end section (WE) of the coolant pipe (WR) is located in the vicinity of the upper edge of the active zone (AZ).

2. Nuclear reactor fuel element according to claim 1, **characterised in that** the openings (8) at the upper end of the coolant pipe (WR) are formed as passages (8) approximately parallel to the linking stud (4) or directed obliquely towards the linking stud (4).

## Revendications

1. Assemblage combustible d'un réacteur nucléaire, comportant
a) au moins un tube (WR) de fluide de refroidissement entouré latéralement par des crayons combustibles (FR) et ayant au moins un orifice à son extrémité supérieure et à son extrémité inférieure,
b) une plaque de base, portée par le tube (WR) de fluide de refroidissement, reliée à l'extrémité inférieure du tube (WR) de fluide de refroidissement et comportant des orifices d'admission pour du fluide de refroidissement à l'état liquide
c) une pièce (WE) d'extrémité de l'extrémité supérieure du tube (WR) de fluide de refroidissement, qui se prolonge en un axe (4) enfichable ayant une section transversale beaucoup plus petite que la section transversale du tube (WR) de fluide de refroidissement,
d) le prolongement (5) de l'axe (4) enfichable traversant une plaque (1) de couverture ajourée d'orifices de sortie de fluide de refroidissement et étant relié à cette plaque (1) de couverture de sorte à la porter,
caractérisé en ce que
e) la pièce (WE) supérieure d'extrémité du tube (WR) de fluide de refroidissement se trouve dans la zone du bord supérieur de la zone active (AZ).

2. Assemblage combustible d'un réacteur nucléaire suivant la revendication 1,
caractérisé en ce que
les orifices (8) à l'extrémité supérieure du tube (WR) de fluide de refroidissement sont formés de canaux (8) de passage à peu près parallèles à l'axe (4) enfichable ou dirigés en oblique vers l'axe enfichable (4).
